# EUROPÄISCHE PATENTSCHRIFT

(11) **EP 3 219 525 B1**
(45) Veröffentlichungstag und Bekanntmachung des Hinweises auf die Patenterteilung: **20.05.2020**
(21) Anmeldenummer: 17158796.7
(22) Anmeldetag: 02.03.2017
(51) Int. Cl.: B60J 1/02, B60J 10/18, B60J 10/21, B60J 10/35, B60J 10/70, B60J 10/32

(54) **PROFILLEISTENANORDNUNG**
PROFILE STRIP ARRANGEMENT
SYSTEME DE MOULURAGE

(30) Priorität: 16.03.2016 DE 102016104848
(43) Veröffentlichungstag der Anmeldung: 20.09.2017
(73) Patentinhaber: Elkamet Kunststofftechnik GmbH, 35216 Biedenkopf (DE)
(72) Erfinder: Ortmüller, Michael, 35232 Dautphetal-Herzhausen (DE); Deußen, Martin, 35039 Marburg (DE); Schoch, Andreas, 35037 Marburg (DE)
(74) Vertreter: DREISS Patentanwälte PartG mbB

(56) Entgegenhaltungen:
- EP-A2- 0 076 924
- EP-A2- 1 955 883
- DE-A1- 3 735 133
- DE-A1-102009 010 015
- DE-A1-102013 204 820
- DE-U1-202008 013 133
- GB-A- 2 093 106

## Beschreibung

Die Erfindung betrifft eine Profilleistenanordnung, umfassend eine aus einem Profilmaterial hergestellte Profilleiste mit einem ersten Verbindungsbereich zur Verbindung mit einem Randbereich einer Windschutzscheibe eines Kraftfahrzeugs und mit einem zweiten Verbindungsbereich zur Verbindung mit einem an die Windschutzscheibe angrenzenden Bauteil.

Profilleistenanordnungen der vorgenannten Art sind beispielsweise aus der DE 20 2008 013 133 U1 bekannt. Diese Druckschrift schlägt vor, zur Befestigung der Profilleiste an einer rückseitigen Oberfläche der Windschutzscheibe einen Verbindungsstreifen zu verwenden, der eine einfache, schnelle und kostengünstige Verbindung schaffen soll. Als Verbindungsstreifen kommt beispielsweise ein auch aus der DE 10 2012 112 663 A1 bekanntes doppelseitiges Klebeband in Betracht.

Eine Weiterbildung ist aus der DE 10 2008 003 252 A1 bekannt. Diese sieht vor, zusätzlich zu einem doppelseitigen Klebeband einen im fließfähigen Zustand aufgebrachten Klebstoffabschnitt zu verwenden, um eine möglichst steife Verbindung zwischen einer Profilleiste und einer Windschutzscheibe herzustellen.

Eine andere Weiterbildung ist aus der DE 10 2012 112 674 A1 bekannt. Diese sieht vor, ein doppelseitiges Klebeband im Bereich einer Stirnkante stoffschlüssig mit einer zusätzlichen Klebstoffraupe zu verbinden, um einem Abschälen des Klebebands entgegenzuwirken.

Eine Profilleistenanordnung mit den Merkmalen des Oberbegriffs des Patentanspruchs 1 ist aus der DE 10 2009 010 015 A1 bekannt. Aus der EP 0 076 924 A1 und aus der GB 2 093 106 A sind weitere Dichtungs- und Befestigungsanordnungen bekannt.

Die vorstehend genannten Konstruktionen haben sich in der Praxis als zu teuer erwiesen. Hiervon ausgehend liegt der vorliegenden Erfindung die Aufgabe zugrunde, eine Profilleistenanordnung der eingangs genannten Art so zu verbessern, dass sie preiswert herstellbar ist.

Diese Aufgabe wird bei einer Profilleistenanordnung mit den Merkmalen des Oberbegriffs des Patentanspruchs 1 erfindungsgemäß durch die kennzeichnenden Merkmale des Patentanspruchs 1 gelöst.

In dem ersten Verbindungsbereich wird ein Oberflächenabschnitt bereitgehalten, der frei ist von Profilmaterial. Bei dem Profilmaterial handelt es sich in an sich bekannter Weise um ein Kunststoffmaterial, beispielsweise um Polyvinylchlorid (PVC), Blends aus Polyvinylchlorid und Poly (acrylnitril-co-butadien-costyrol) (PVC/ABS) oder um Polypropylen (PP). Insbesondere Polypropylen hat sich bei Profilleistenanordnungen als robust und beständig erwiesen. Das Profilmaterial weist jedoch keine optimalen Eigenschaften auf für eine stoffschlüssige Verbindung mit der Windschutzscheibe bzw. mit zwischenliegenden Verbindungsschichten.

Es wird an einem unteren Verbindungsabschnitt, der mit einer Innenseite des Randbereichs der Windschutzscheibe zusammenwirkt, ein von dem Profilmaterial der Profilleiste freier Oberflächenabschnitt bereitgestellt, wobei eine in diesem freien Oberflächenabschnitt angeordnete Oberfläche von einem anderen Material als dem Profilmaterial gebildet ist. Dies eröffnet die Möglichkeit einer vergleichsweise großflächigen, stabilen und preiswerten Verbindung zwischen der Profilleiste und der Innenseite des Randbereichs der Windschutzscheibe.

Bei dem Zusatzelement handelt es sich insbesondere um einen Flachkörper, der zumindest in oder an dem unteren Verbindungsabschnitt des ersten Verbindungsbereichs angeordnet ist.

Erfindungsgemäß besteht das Zusatzelement aus einem Kunststoffmaterial, wobei das Kunststoffmaterial eine höhere Oberflächenenergie aufweist als das Profilmaterial. Für das Zusatzelement sind insbesondere die folgenden Kunststoffmaterialien bevorzugt: Polymethylmethacrylat (PMMA), Polycarbonat (PC), Acrylnitril-Butadien-Styrol (ABS), Polyvinylchlorid (PVC), Polyethylentherephtalat (PET), Polyamide (bspw. PA6, PA6.6, PA11, PA12). Diese Materialien weisen im Vergleich zu dem Profilmaterial eine verbesserte Verklebbarkeit auf.

Die Oberflächenenergien des Profilmaterials und des Materials des Zusatzelements lassen sich in an sich bekannter Weise durch Kontaktwinkelmessungen mit anschließender Auswertung nach der Young'schen Gleichung ermitteln, wie in DIN EN 828:2013 beschrieben. Hierbei genügt es, die Oberflächenenergien des Profilmaterials und des Materials des Zusatzelements unter jeweils gleichen Messbedingungen (insbesondere unter Verwendung jeweils gleicher Prüfflüssigkeiten) zu ermitteln und miteinander zu vergleichen.

Das Zusatzelement kann als Vlies, Gewebe, Band oder Tape ausgebildet sein. Das Zusatzelement kann aus einem Verbundmaterial aus Fasern und Kunststoffmatrix gebildet sein. Als Fasermaterial eignen sich insbesondere: Mineralfasern, Glasfasern oder Kohlenstofffasern. Bei den Fasern kann es sich um Kurz-, Lang- oder Endlosfasern handeln. Als Kunststoffmatrix eignen sich beispielsweise die oben für das Profilmaterial genannten Kunststoffe sowie insbesondere die oben für das Kunststoffmaterial des Zusatzelements genannten Kunststoffe.

Es ist möglich, dass die Oberfläche des Zusatzelements diejenige Oberfläche ist, die in dem Bereich des von dem Profilmaterial freien Oberflächenabschnitts angeordnet ist. Es ist aber auch möglich, dass das Zusatzelement eine Beschichtung aufweist; in diesem Fall ist der von dem Profilmaterial freie Oberflächenabschnitt durch eine Oberfläche gebildet, die aus dem Beschichtungsmaterial hergestellt ist und die von dem Zusatzelement getragen wird. Bei der Beschichtung kann es sich beispielsweise um eine Schutz- oder Haftvermittlerschicht handeln.

Es ist möglich, dass der erste Verbindungsbereich zusätzlich zu dem unteren Verbindungsabschnitt einen seitlichen Verbindungsabschnitt aufweist, der mit einer Stirnseite des Randbereichs der Windschutzscheibe zusammenwirkt, und/oder dass der erste Verbindungsbereich einen oberen Verbindungsabschnitt aufweist, der mit einer Außenseite des Randbereichs der Windschutzscheibe zusammenwirkt, und dass der mindestens eine freie Oberflächenabschnitt an dem unteren Verbindungsabschnitt und/oder dem seitlichen Verbindungsabschnitt und/oder dem oberen Verbindungsabschnitt angeordnet ist.

Ein oberer Verbindungsabschnitt eines ersten Verbindungsbereichs ist insbesondere bei Profilleisten vorgesehen, welche eine sogenannte U-förmige Anbindung der Profilleiste an den Randbereich der Windschutzscheibe aufweisen. Bei dieser U-förmigen Anbindung sind sowohl ein unterer Verbindungsabschnitt als auch ein seitlicher Verbindungsabschnitt als auch ein oberer Verbindungsabschnitt vorgesehen, wobei der untere Verbindungsabschnitt und der obere Verbindungsabschnitt die Schenkel eines "U" bilden und den Randbereich der Windschutzscheibe umgreifen.

Eine besonders einfache und kompakte Verbindungsmöglichkeit zwischen der Profilleiste und der Windschutzscheibe ergibt sich, wenn der freie Oberflächenabschnitt dem Randbereich der Windschutzscheibe zugewandt ist.

Die erfindungsgemäße Profilleistenanordnung bezieht sich auf Profilleisten, welche im zweiten Verbindungsbereich einen im Profil U- oder V-förmigen Aufnahmeraum zur Aufnahme eines Rastelements des an die Windschutzscheibe angrenzenden Bauteils, in Form einer Wasserkastenabdeckung, aufweisen. Derartige zweite Verbindungsbereiche sind beispielsweise bekannt aus EP 2 123 497 A1.

Es ist möglich, dass das Zusatzelement lediglich in dem ersten Verbindungsbereich angeordnet ist und sich dort ausschließlich in dem freien Oberflächenabschnitt erstreckt. Auf diese Weise genügt ein vergleichsweise kleines und sehr einfach herstellbares Zusatzelement, um bessere Voraussetzungen für eine stoffschlüssige Verbindung des Profilmaterials mit der Windschutzscheibe zu schaffen.

Es kann aber auch bevorzugt sein, dass in dem Bereich eines Teilabschnitts des Zusatzelements dieses sowohl auf seiner Unterseite als auch auf seiner Oberseite mit Profilmaterial bedeckt ist. Ein solches Zusatzelement weist also mindestens einen Teilbereich auf, in welchem das Zusatzelement in dem Profilmaterial der Profilleiste verankert ist.

Bei dem genannten Teilabschnitt kann es sich insbesondere um ein freies Ende des Zusatzelements und/oder einen dem zweiten Verbindungsbereich zugewandten Abschnitt des Zusatzelements handeln. Hierdurch ist das Zusatzelement optimal gegen eine Ablösung von dem Profilmaterial geschützt.

Bei einer weiteren bevorzugten Ausführungsform der Erfindung ist vorgesehen, dass die Profilleiste einen zentralen Abschnitt aufweist, der den ersten Verbindungsbereich und den zweiten Verbindungsbereich miteinander verbindet, und dass das Zusatzelement im Bereich des zentralen Abschnitts Durchbrüche aufweist, insbesondere in Form einer Perforierung. Dies ermöglicht eine weiter optimierte Verankerung des Zusatzelements in dem Profilmaterial der Profilleiste.

Bei einer Versteifungseinlage handelt es sich insbesondere um Folien oder Bleche, welche aus Metall hergestellt sind, insbesondere aus Stahl oder aus einer Stahllegierung oder aus Aluminium oder aus einer Aluminiumlegierung.

Alternativ hierzu kann die Versteifungseinlage auch aus einem nichtmetallischen Werkstoff bestehen, beispielsweise aus einem von dem Profilmaterial verschiedenen Kunststoffmaterial oder aus einem Verbundmaterial aus Fasern und Kunststoffmatrix.

Die Nutzung der Versteifungseinlage als Zusatzelement durch Freilegung der Oberfläche einer Versteifungseinlage in dem ersten Verbindungsbereich ermöglicht eine besonders einfache und preiswerte Herstellung einer Profilleistenanordnung.

Für eine stoffschlüssige Verbindung des ersten Verbindungsbereichs mit der Windschutzscheibe ist zumindest ein Teilbereich des freien Oberflächenabschnitts von einem Klebeabschnitt überdeckt, der zur Klebeverbindung mit dem Randbereich der Windschutzscheibe dient.

Der Klebeabschnitt ist durch ein doppelseitiges Klebeband gebildet. Durch die erfindungsgemäße Freilegung eines Oberflächenabschnitts, in welchem kein Profilmaterial angeordnet ist, können in diesem Bereich Klebebänder verwendet werden, deren Hafteigenschaften lediglich im Hinblick auf die Oberfläche des Zusatzelements und im Hinblick auf den Randbereich der Windschutzscheibe optimiert werden müssen, nicht jedoch im Hinblick auf eine Haftfähigkeit mit dem Profilmaterial der Profilleiste. Auf diese Weise ist es möglich, einfache und preisgünstige Klebebänder zu verwenden.

Der Erfindung liegt die weitere Aufgabe zugrunde, ein Verfahren anzugeben, mit welchem eine vorstehend beschriebene Profilleistenanordnung preiswert herstellbar ist.

Diese Aufgabe wird dadurch gelöst, dass die Profilleiste und das Zusatzelement voneinander unabhängig hergestellt und anschließend miteinander verbunden werden, insbesondere miteinander verklebt und/oder verpresst.

Diese Aufgabe wird auch dadurch gelöst, dass das Profilmaterial der Profilleiste extrudiert wird, dass das Zusatzelement während der Extrusion des Profilmaterials zugeführt wird und dass das Profilmaterial in einem mit dem Zusatzelement zumindest abschnittsweise verbundenen Zustand erstarrt.

Ausgestaltungen und Vorteile der erfindungsgemäßen Verfahren sind zum Teil bereits vorstehend erläutert. Daher wird auf die vorstehende Beschreibung Bezug genommen und im Übrigen ergänzt:
Eine voneinander unabhängige Herstellung von Profilleiste und Zusatzelement und eine anschließende Verbindung dieser Bauteile eignet sich insbesondere für Profilleistenanordnungen, bei welchen sich das Zusatzelement ausschließlich in dem freien Oberflächenabschnitt erstreckt.

Wenn das Zusatzelement während der Extrusion des Profilmaterials zugeführt wird, kann es sich bei dem Zusatzelement um einen profilierten Endlosstrang oder um ein Band aus metallischem Material oder aus Kunststoff- oder Faserkunststoffverbundmaterial handeln, wobei der Endlosstrang oder das Band zusammen mit dem Profilmaterial die Extrusionsdüse durchläuft, sodass sowohl das Zusatzelement als auch die Profilleiste gemeinsam miteinander in einem Endlosverfahren hergestellt werden können.

Für den Fall, dass nicht das fertig hergestellte Zusatzelement, sondern lediglich das Material zur Herstellung des Zusatzelements während der Extrusion des Profilmaterials zugeführt wird ("Koextrusion"), ist es bevorzugt, wenn das Zusatzelement aus einem von dem Profilmaterial der Profilleiste abweichenden Kunststoffmaterial hergestellt ist. Hierbei können insbesondere die oben für das Zusatzelement genannten Materialien verwendet werden.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Fig. 1: eine Seitenansicht einer ersten Ausführungsform einer Profilleistenanordnung, umfassend eine Profilleiste mit einem Zusatzelement;
- Fig. 2: die Profilleistenanordnung gemäß Fig. 1, zusätzlich umfassend einen Klebeabschnitt;
- Fig. 3: die Profilleistenanordnung gemäß Fig. 2, zusätzlich umfassend eine Windschutzscheibe;
- Fig. 4: eine Seitenansicht einer weiteren Ausführungsform einer Profilleistenanordnung, umfassend mindestens ein Zusatzelement in Form einer Versteifungseinlage;
- Fig. 5: eine Seitenansicht einer weiteren Ausführungsform einer Profilleistenanordnung;
- Fig. 6: eine Seitenansicht einer weiteren Ausführungsform einer Profilleistenanordnung;
- Fig. 7: eine perspektivische Ansicht einer Versteifungseinlage der Profilleistenanordnung gemäß Fig. 6;
- Fig. 8: eine Seitenansicht einer weiteren Ausführungsform einer Profilleistenanordnung; und
- Fig. 9: eine Seitenansicht einer weiteren Ausführungsform einer Profilleistenanordnung, mit einer extrudierten Profilleiste, einem koextrudierten Zusatzelement und mit einem Klebeabschnitt.

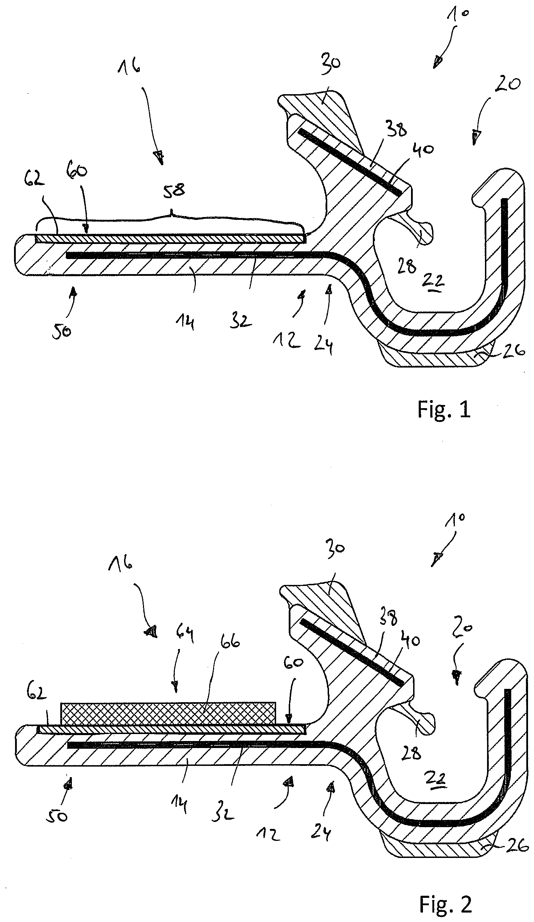

In den Figuren 1 bis 6 sowie 8 und 9 dargestellte Profilleistenanordnungen sind dort insgesamt jeweils mit dem Bezugszeichen 10 bezeichnet. Die Profilleistenanordnungen 10 umfassen jeweils eine Profilleiste 12, die aus einem Profilmaterial 14 hergestellt ist. Bei dem Profilmaterial 14 handelt es sich um einen Kunststoff, beispielsweise um Polyvinylchlorid (PVC), Blends aus Polyvinylchlorid und Poly (acrylnitril-co-butadien-co-styrol) (PVC/ABS) oder insbesondere um Polypropylen (PP).

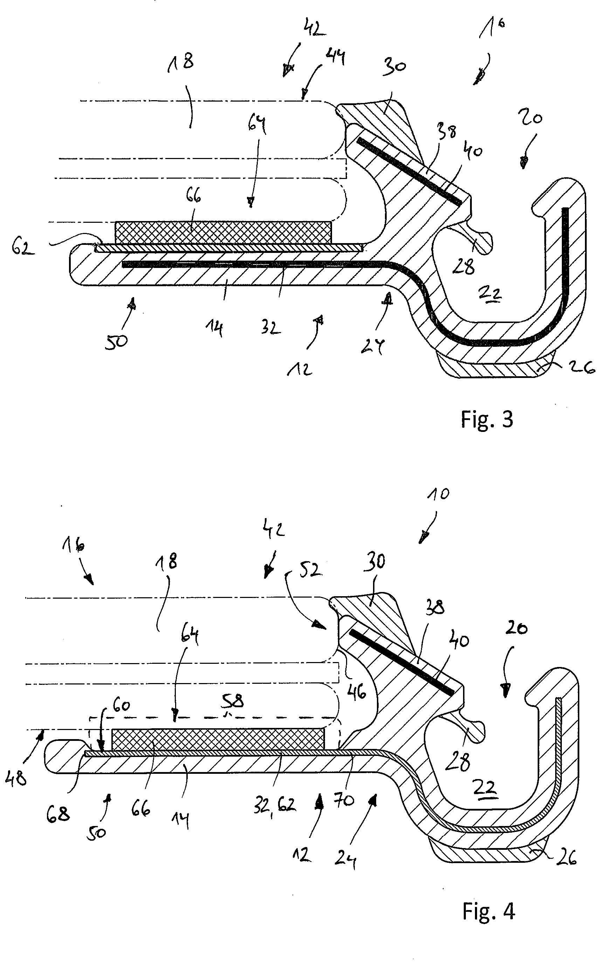

Die Profilleisten 12 weisen jeweils einen ersten Verbindungsbereich 16 zur Verbindung mit einer Windschutzscheibe 18 (vergleiche Figuren 3 und 4) auf, sowie einen zweiten Verbindungsbereich 20 zur Verbindung der Profilleiste 12 mit einem an die Windschutzscheibe 18 angrenzenden Bauteil, insbesondere einer Wasserkastenabdeckung. Solche Bauteile sind beispielsweise aus der EP 2 123 497 A1 bekannt und weisen Rastelemente auf, welche in einem U- oder V-förmigen Aufnahmeraum 22 des zweiten Verbindungsbereichs 20 verrastet werden, um das an die Windschutzscheibe angrenzende Bauteil an der Profilleiste 12 festzulegen.

Zur Verbindung des ersten Verbindungsbereichs 16 und des zweiten Verbindungsbereichs 20 weisen die Profilleisten 12 jeweils einen zentralen Abschnitt 24 auf.

Es ist möglich, dass die Profilleisten 12 zusätzliche Funktionsabschnitte aufweisen, welche aus einem anderen Material hergestellt sind als das Profilmaterial 14. Bei solchen Funktionsabschnitten kann es sich beispielsweise um einen Abstützabschnitt 26 zur Abstützung des zweiten Verbindungsbereichs 20 an einem Fahrzeugbauteil handeln. Es kann sich beispielsweise auch um einen dem zweiten Verbindungsbereich 20 zugeordneten Rastkörper 28 handeln. Es kann sich auch um einen Dichtkörper 30 handeln, der zur dichtenden Anlage gegen eine Windschutzscheibe und gegen das an die Windschutzscheibe angrenzende Bauteil dient.

Es ist möglich und bevorzugt, dass die Profilleisten 12 entlang ihres Verlaufs zwischen dem ersten Verbindungsbereich 16 und dem zweiten Verbindungsbereich 20 mittels mindestens einer Versteifungseinlage 32 verstärkt sind.

Bei den Versteifungseinlagen 32 handelt es sich insbesondere um profilierte Flachkörper aus Stahl, einer Stahllegierung, Aluminium oder einer Aluminiumlegierung. Alternativ hierzu kann die Versteifungseinlage 32 aus einem Kunststoff- oder Faserkunststoffverbundmaterial gebildet sein und insbesondere einen Kunststoff umfassen, der eine höhere Oberflächenenergie aufweist als das Profilmaterial.

Es ist auch möglich, dass eine Versteifungseinlage 32 sich nur und ausschließlich innerhalb eines Verbindungsbereichs 16 bzw. 20 erstreckt.

Darüber hinaus ist es bei Anordnung eines Dichtkörpers 30 bevorzugt, dass ein Trägerabschnitt 38 der Profilleiste 12, welcher den Dichtkörper 30 trägt, ebenfalls mittels einer Versteifungseinlage 40 verstärkt ist.

Die Windschutzscheibe 18 weist einen in ihrer Einbaulage an einem Kraftfahrzeug unteren Randbereich 42 auf, der mit dem ersten Verbindungsbereich 16 der Profilleiste 12 zusammenwirkt. Der Randbereich 42 weist eine Außenseite 44, eine Stirnseite 46 und eine Innenseite 48 auf, vergleiche Figuren 3 und 4.

Der erste Verbindungsbereich 16 der Profilleiste 12 weist zumindest einen unteren Verbindungsabschnitt 50 auf, der mit der Innenseite 48 des Randbereichs 42 der Windschutzscheibe 18 zusammenwirkt. Es ist möglich, dass zusätzlich ein seitlicher Verbindungsabschnitt 52 vorgesehen ist, der mit der Stirnseite 46 des Randbereichs 42 der Windschutzscheibe 18 zusammenwirkt.

Es kann auch ein oberer Verbindungsabschnitt vorgesehen sein, der mit der Außenseite 44 des Randbereichs 42 der Windschutzscheibe 18 zusammenwirkt und sich vorzugsweise parallel und beabstandet zu dem unteren Verbindungsabschnitt 50 erstreckt, wobei ein unterer Verbindungsabschnitt 50, ein seitlicher Verbindungsabschnitt 52 und ein oberer Verbindungsabschnitt gemeinsam in dem ersten Verbindungsbereich 16 ein "U-Profil" bilden, das den Randbereich 42 einer Windschutzscheibe 18 umklammert.

Die Profilleisten 12 weisen in dem ersten Verbindungsbereich 16 einen Oberflächenabschnitt 58 auf, der frei ist von Profilmaterial 14. Der Oberflächenabschnitt 58 wird anstelle des Profilmaterials 14 von einer Oberfläche 60 eines Zusatzelements 62 gebildet.

In dem in oder an dem ersten Verbindungsbereich 16 angeordneten Zustand des Randbereichs 42 der Windschutzscheibe 18 ist die Oberfläche 60 dem Randbereich 42 zugewandt. Die an dem unteren Verbindungsabschnitt 50 vorgesehene Oberfläche 60 ist der Innenseite 48 des

Randbereichs 42 der Windschutzscheibe zugewandt (vergleiche Figuren 1 bis 6 sowie 8 und 9). Wenn eine Oberfläche 60 an einem seitlichen Verbindungsabschnitt 52 angeordnet ist, ist diese Oberfläche 60 der Stirnseite 46 des Randbereichs 42 der Windschutzscheibe 18 zugewandt. Wenn eine Oberfläche 60 an einem (nicht dargestellten) oberen Verbindungsabschnitt angeordnet ist, ist diese Oberfläche 60 der Außenseite 44 des Randbereichs 42 der Windschutzscheibe 18 zugewandt.

Bei dem Zusatzelement 62 gemäß Figuren 1 bis 3 handelt es sich um ein Zusatzelement, welches separat zu Versteifungseinlagen 32, 40 der Profilleistenanordnungen 10 bereitgestellt ist und an der Profilleiste 12 zu den Versteifungseinlagen 32, 40 beabstandet angeordnet ist. Dieses Zusatzelement 62 erstreckt sich ausschließlich in dem freien Oberflächenabschnitt 58.

Bei dem Zusatzelement 62 handelt es sich insbesondere um einen ebenen Flachkörper. Der Flachkörper ist aus einem Kunststoff- oder Faserkunststoffverbundmaterial gebildet und umfasst einen Kunststoff, der eine höhere Oberflächenenergie aufweist als das Profilmaterial 14. Es kann sein, dass das Zusatzelement 62 selbst die Oberfläche 60 bildet, oder aber eine Beschichtung des Zusatzelements 62.

Für eine stoffschlüssige Verbindung zwischen dem Zusatzelement 62 und dem Randbereich 42 der Windschutzscheibe 18 ist ein Klebeabschnitt 64 vorgesehen, welcher durch ein doppelseitiges Klebeband 66 gebildet ist. Das Klebeband 66 weist voneinander abgewandte Klebeseiten auf. Eine erste Klebeseite wirkt mit der Oberfläche 60 des Zusatzelements 62 zusammen, und eine von der ersten Seite abgewandte zweite Klebeseite wirkt mit der Innenseite 48 des Randbereichs 42 der Windschutzscheibe 18 zusammen.

Es ist möglich, dass die Profilleisten 12 keine Versteifungseinlagen 32, 40 aufweisen. Für den Fall, dass mindestens eine Versteifungseinlage 32, 40 vorgesehen ist, ist es möglich, dass eine solche Versteifungseinlage 32 und/oder 40 ein Zusatzelement 62 bildet. Solche Anordnungen sind in den Figuren 4 bis 6 und 8 dargestellt.

Beispielsweise ist eine Versteifungseinlage 32 vorgesehen, die in das Material 14 der Profilleiste 12 eingebettet ist (vergleiche Fig. 4). In einem Oberflächenabschnitt 58 liegt die Oberfläche 60 der Versteifungseinlage 32 oder einer Beschichtung der Versteifungseinlage 32 frei, sodass die Oberfläche der Versteifungseinlage 32 oder eine Beschichtung der Versteifungseinlage 32 mit einem Klebeabschnitt 64, insbesondere mit einem doppelseitigen Klebeband 66, versehen werden kann.

Es ist bevorzugt, dass ein freies Ende 68 der Versteifungseinlage 32 sowohl auf seiner Unterseite als auch auf seiner Oberseite mit Profilmaterial 14 bedeckt ist und somit zumindest ein Teilbereich der Versteifungseinlage 32 in dem Profilmaterial 14 der Profilleiste 12 verankert ist. Dies gilt in entsprechender Weise für einen dem zweiten Verbindungsbereich 20 zugewandten Abschnitt 70 der Versteifungseinlage 32.

Bei dem in Figur 4 dargestellten Ausführungsbeispiel variiert die Stärke des Profilmaterials 14 entlang des Verlaufs des unteren Verbindungsabschnitts 50 im Querschnitt gesehen.

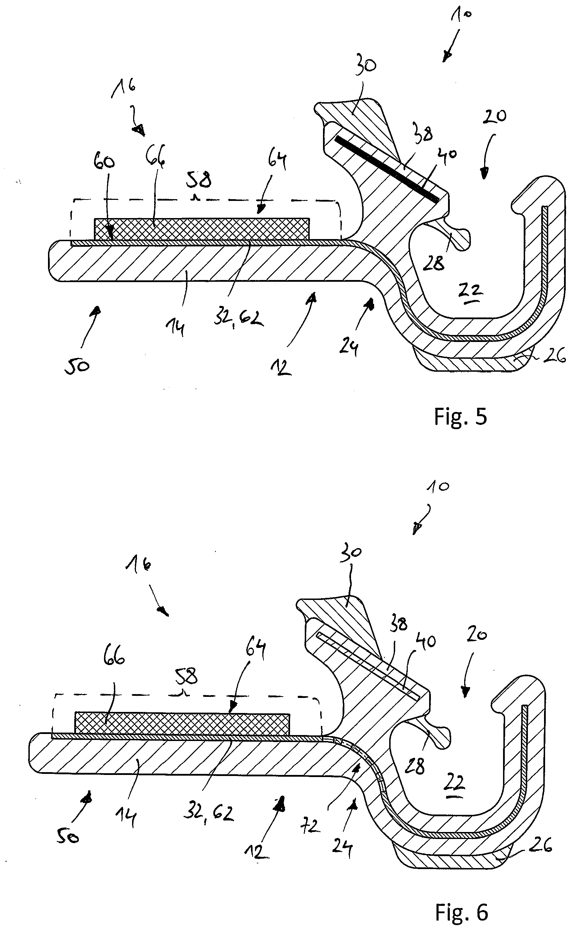

Es ist auch möglich, dass die Materialstärke des unteren Verbindungsabschnitts 50 nicht variiert, wobei gleichzeitig eine Versteifungseinlage 32 als Zusatzelement genutzt wird, vergleiche Figuren 5, 6 und 8.

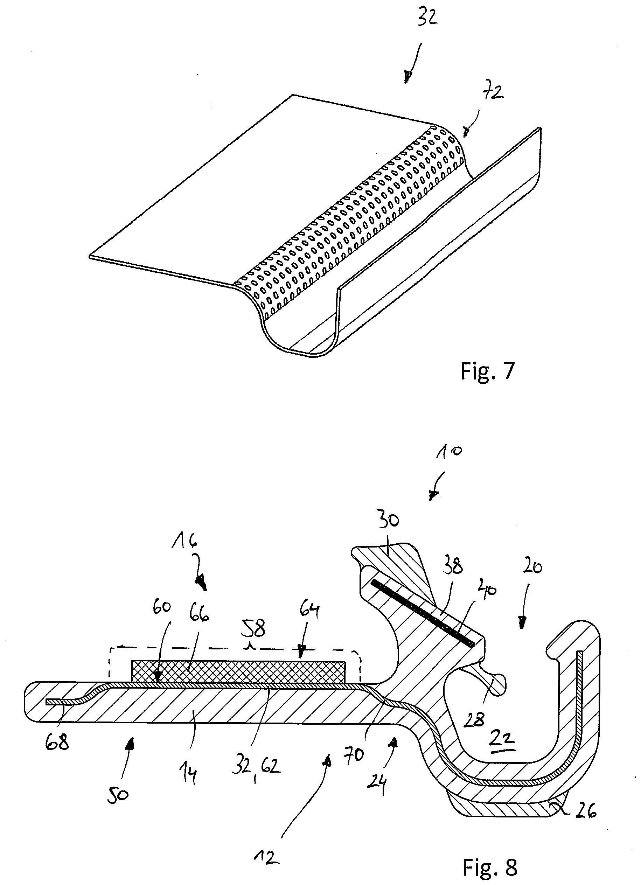

In dem in Figur 5 dargestellten Ausführungsbeispiel erstreckt sich die Versteifungseinlage 32, welche ein Zusatzelement 62 bildet, entlang einer geraden Ebene und ist in diesem Bereich lediglich auf einer Seite mit Profilmaterial 14 bedeckt. Um eine Verankerung der Versteifungseinlage 32 in dem Profilmaterial 14 zu verbessern, kann es vorgesehen sein, dass die Versteifungseinlage 32 eine Perforierung 72 aufweist, wodurch die Möglichkeit geschaffen wird, dass das Profilmaterial 14 die Versteifungseinlage 32 durchdringt, vergleiche Figuren 6 und 7. Vorzugsweise ist die Perforierung 72 dem zentralen Abschnitt 24 der Profilleiste 12 zugeordnet.

Eine weitere bevorzugte Möglichkeit, eine Versteifungseinlage 32, die ein Zusatzelement bildet, in dem Profilmaterial 14 der Profilleiste 12 zu verankern, besteht darin, dass zumindest ein freies Ende 68 und/oder ein dem zweiten Verbindungsbereich 20 zugewandter Abschnitt 70 der Versteifungseinlage 32 sowohl auf der Unterseite als auch auf der Oberseite mit Profilmaterial 14 bedeckt ist oder sind, vergleiche Figur 8. Ein Zusatzelement 62 kann in diesem Fall dadurch geschaffen werden, dass die Versteifungseinlage 32 nicht entlang ihres gesamten Verlaufs vom freien Ende 68 bis hin zum Abschnitt 70 in das Profilmaterial 14 eingebettet ist, sondern in dem Bereich eines freien Oberflächenabschnitts 58 lediglich auf einer Unterseite mit Profilmaterial 14 bedeckt ist. Dies kann beispielsweise dadurch erreicht werden, dass die Versteifungseinlage 32 entlang ihres Verlaufs zwischen dem freien Ende 68 und dem Abschnitt 70 eine Überhöhung aufweist, sodass die der Unterseite gegenüberliegende Oberseite der Versteifungseinlage 32 eine Oberfläche 60 bildet, die von Profilmaterial 14 frei ist. Auf diese Weise bildet die Versteifungseinlage 32 in diesem Bereich ein Zusatzelement 62, welches vorzugsweise zur Anordnung eines doppelseitigen Klebebands 66 dient oder an welchem ein doppelseitiges Klebeband 66 angeklebt ist.

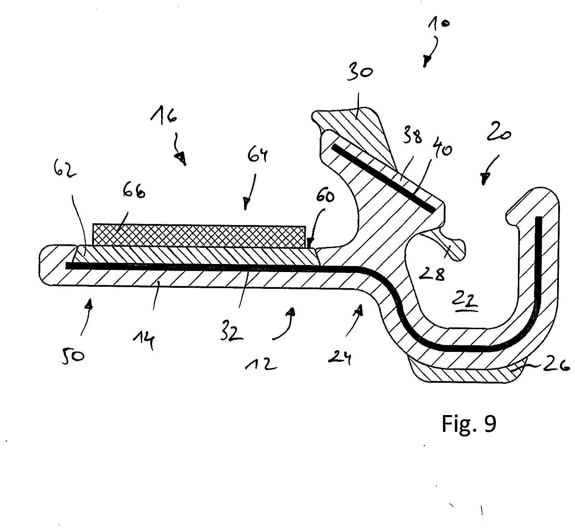

Bei einem von einer Versteifungseinlage 32, 40 unabhängig bereitgestellten Zusatzelement 62 kann es sich auch um einen Materialabschnitt aus Kunststoff handeln, der vorzugsweise mit dem Profilmaterial 14 der Profilleiste 12 koextrudiert ist, vergleiche Figur 9.

## Patentansprüche

1. Profilleistenanordnung (10), umfassend eine aus einem Profilmaterial (14) hergestellte Profilleiste (12) mit einem ersten Verbindungsbereich (16) zur Verbindung mit einem Randbereich (42) einer Windschutzscheibe (18) eines Kraftfahrzeugs und mit einem zweiten Verbindungsbereich (20) zur Verbindung mit einem an die Windschutzscheibe (18) angrenzenden Bauteil in Form einer Wasserkastenabdeckung, wobei der zweite Verbindungsbereich (20) einen im Profil U- oder V-förmigen Aufnahmeraum (22) zur Aufnahme eines Rastelements der Wasserkastenabdeckung aufweist, wobei die Profilleiste (12) mindestens eine Versteifungseinlage (32, 40) aufweist, wobei der erste Verbindungsbereich (16) einen unteren Verbindungsabschnitt (50) aufweist, der mit einer Innenseite (48) des Randbereichs (42) der Windschutzscheibe (18) zusammenwirkt und der mindestens einen von dem Profilmaterial (14) freien Oberflächenabschnitt (58) aufweist, wobei der freie Oberflächenabschnitt (58) durch die Oberfläche (60) eines Zusatzelements (62) gebildet ist, die aus einem anderen Material besteht als die Profilleiste (12), **dadurch gekennzeichnet, dass** das Zusatzelement (62) von der mindestens einen Versteifungseinlage (32, 40) separat bereitgestellt ist, dass zumindest ein Teilbereich des freien Oberflächenabschnitts (58) des Zusatzelements (62) von einem Klebeabschnitt (64) überdeckt ist, der zur Klebeverbindung mit dem Randbereich (42) der Windschutzscheibe (18) dient, dass der Klebeabschnitt (64) durch ein doppelseitiges Klebeband (66) gebildet ist und dass das Zusatzelement (62) aus einem Kunststoffmaterial besteht, das eine höhere Oberflächenenergie aufweist als das Profilmaterial (14).

2. Profilleistenanordnung (10) nach Anspruch 1, **dadurch gekennzeichnet, dass** das Kunststoffmaterial ein Faserkunststoffverbundmaterial ist.

3. Profilleistenanordnung (10) nach einem der voranstehenden Ansprüche, **dadurch gekennzeichnet, dass** das Zusatzelement (62) eine Beschichtung aufweist.

4. Profilleistenanordnung (10) nach einem der voranstehenden Ansprüche, **dadurch gekennzeichnet, dass** der erste Verbindungsbereich (16) einen seitlichen Verbindungsabschnitt (52) aufweist, der mit einer Stirnseite (46) des Randbereichs (42) der Windschutzscheibe (18) zusammenwirkt, und/oder dass der erste Verbindungsbereich (16) einen oberen Verbindungsabschnitt aufweist, der mit einer Außenseite (44) des Randbereichs (42) der Windschutzscheibe (18) zusammenwirkt, und dass der mindestens eine freie Oberflächenabschnitt (58) an dem seitlichen Verbindungsabschnitt (52) und/oder dem oberen Verbindungsabschnitt angeordnet ist.

5. Profilleistenanordnung (10) nach einem der voranstehenden Ansprüche, **dadurch gekennzeichnet, dass** der freie Oberflächenabschnitt (58) dem Randbereich (42) der Windschutzscheibe (18) zugewandt ist.

6. Profilleistenanordnung (10) nach einem der voranstehenden Ansprüche, **dadurch gekennzeichnet, dass** sich das Zusatzelement (62) ausschließlich in dem freien Oberflächenabschnitt (58) erstreckt.

7. Profilleistenanordnung (10) nach einem der Ansprüche 1 bis 5, **dadurch gekennzeichnet, dass** in dem Bereich eines Teilabschnitts des Zusatzelements dieses sowohl auf seiner Unterseite als auch auf seiner Oberseite mit Profilmaterial (14) bedeckt ist.

8. Profilleistenanordnung (10) nach Anspruch 7, **dadurch gekennzeichnet, dass** der Teilabschnitt durch ein freies Ende (68) des Zusatzelements und/oder durch einen dem zweiten Verbindungsbereich (20) zugewandten Abschnitt (70) des Zusatzelements gebildet ist.

9. Profilleistenanordnung (10) nach einem der voranstehenden Ansprüche, **dadurch gekennzeichnet, dass** die Profilleiste (12) einen zentralen Abschnitt (24) aufweist, der den ersten Verbindungsbereich (16) und den zweiten Verbindungsbereich (20) miteinander verbindet, und dass das Zusatzelement im Bereich des zentralen Abschnitts (24) Durchbrüche aufweist, insbesondere in Form einer Perforierung (72).

10. Verfahren zur Herstellung einer Profilleistenanordnung (10) nach einem der voranstehenden Ansprüche, **dadurch gekennzeichnet, dass** die Profilleiste (12) und das Zusatzelement (62) voneinander unabhängig hergestellt und anschließend miteinander verbunden werden.

11. Verfahren zur Herstellung einer Profilleistenanordnung (10) nach einem der Ansprüche 1 bis 9, **dadurch gekennzeichnet, dass** das Profilmaterial (14) der Profilleiste (12) extrudiert wird, dass das Zusatzelement (62) oder ein Material zur Herstellung des Zusatzelements (62) während der Extrusion des Profilmaterials (14) zugeführt wird und dass das Profilmaterial (14) in einem mit dem Zusatzelement (62) zumindest abschnittsweise verbundenen Zustand erstarrt.

## Claims

1. A profile strip arrangement (10), comprising a profile strip (12) made of a profile material (14), having a first connecting area (16) for purposes of creating a connection to an edge area (42) of the windshield (18) of a motor vehicle, and having a second connecting area (20) for purposes of creating a connection to a part that is adjacent to the windshield (18) in the form of a radiator tank cover, whereby the second connecting area (20) has a receiving space (22) with a U-shaped or V-shaped profile for purposes of receiving a latching element of the radiator tank cover, whereby the profile strip (12) has at least one reinforcement insert (32, 40), whereby the first connecting area (16) has a lower connecting section (50) which interacts with the inside (48) of the edge area (42) of the windshield (18) and which has at least one surface section (58) that is free of the profile material (14), whereby the free surface section (58) is formed by the surface (60) of an additional element (62) that is made of a material that differs from that of the profile strip (12), **characterized in that** the additional element (62) is provided separately from the reinforcement inserts (32, 40) that at least a partial area of the free surface section (58) of the additional element (62) is covered by an adhesive section (64) that serves for purposes of creating an adhesive connection to the edge area (42) of the windshield (18), that the adhesive section (64) is in the form of a double-sided adhesive tape (66), and that the additional element (62) is made of a plastic material, which has a higher surface energy than the profile material.

2. The profile strip arrangement (10) according to claim 1, **characterized in that** the plastic material is a fiber-plastic composite material.

3. The profile strip arrangement (10) according to one of the preceding claims, **characterized in that** the additional element (62) has a coating.

4. The profile strip arrangement (10) according to one of the preceding claims, **characterized in that** the first connecting area (16) has a lateral connecting section (52) that interacts with a face (46) of the edge area (42) of the windshield (18), and/or **in that** the first connecting area (16) has an upper connecting section that interacts with the outside (44) of the edge area (42) of the windshield (18), and **in that** at least one free surface section (58) is arranged on the lateral connecting section (52) and/or on the upper connecting section.

5. The profile strip arrangement (10) according to one of the preceding claims, **characterized in that** the free surface section (58) faces the edge area (42) of the windshield (18).

6. The profile strip arrangement (10) according to one of the preceding claims, **characterized in that** the additional element (62) extends exclusively in the first free surface section (58).

7. The profile strip arrangement (10) according to one of claims 1 to 5, **characterized in that** the bottom as well as the top of the additional element are covered with profile material (14) in the area of a partial section.

8. The profile strip arrangement (10) according to claim 7, **characterized in that** the partial section is formed by a free end (68) of the additional element and/or by a section (70) of the additional element facing the second connecting area (20).

9. The profile strip arrangement (10) according to one of the preceding claims, **characterized in that** the profile strip (12) has a central section (24) which connects the first connecting area (16) and the second connecting area (20) to each other, and **in that** the additional element has openings, especially in the form of perforations (72), in the area of the central section (24).

10. A method for the production of a profile strip arrangement (10) according to one of the preceding claims, **characterized in that** the profile strip (12) and the additional element (62) are produced independently of each other and subsequently joined together.

11. The method for the production of a profile strip arrangement (10) according to one of claims 1 to 9, **characterized in that** the profile material (14) of the profile strip (12) is extruded, **in that** the additional element (62) or a material for the production of the additional element (62) is added during the extrusion of the profile material (14), and **in that** the profile material (14) solidifies when it is connected to the additional element (62), at least in certain sections.

## Revendications

1. Agencement de baguette profilée (10), comprenant une baguette profilée (12) fabriquée en un matériau de profilé (14) avec une première zone de connexion (16) pour une connexion à une zone de bord (42) d'un pare-brise (18) d'un véhicule à moteur et avec une seconde zone de connexion (20) pour une connexion avec un composant adjacent au pare-brise (18) sous la forme d'une couverture d'auvent, dans lequel la seconde zone de connexion (20) présente un espace de réception en forme de U ou en V (22) pour recevoir un élément de verrouillage de la couverture d'auvent, dans lequel la baguette profilée (12) présente au moins une garniture de renfort (32, 40), dans lequel la première zone de connexion (16) ayant une section de connexion inférieure (50) qui interagit avec un côté intérieur (48) de la zone de bord (42) du pare-brise (18) et qui comprend au moins une section de surface (58) libre du matériau de profilé (14), dans lequel la section de surface libre (58) est formée via la surface (60) d'un élément supplémentaire (62), qui est constitué d'un matériau différent de la baguette profilée (12), **caractérisé en ce que** l'élément supplémentaire (62) est prévu séparé de la au moins une garniture de renfort (32, 40), **en ce qu'**au moins une partie de la section de surface libre (58) de l'élément supplémentaire (62) est recouverte d'une section adhésive (64) qui sert à la connexion adhésive à la zone de bord (42) du pare-brise (18), **en ce que** la section adhésive (64) est formée par un ruban adhésif double face (66) et **en ce que** l'élément supplémentaire (62) est constitué d'un matériau plastique qui a une énergie de surface plus élevée que le matériau de profilé (14).

2. Agencement de baguette profilée (10) selon la revendication 1, **caractérisé en ce que** le matériau plastique est un matériau composite plastique fibreux.

3. Agencement de baguette profilée (10) selon l'une des revendications précédentes, **caractérisé en ce que** l'élément supplémentaire (62) présente un revêtement.

4. Agencement de baguette profilée (10) selon l'une des revendications précédentes, **caractérisé en ce que** la première zone de connexion (16) présente une section de connexion latérale (52) qui interagit avec un côté avant (46) de la zone de bord (42) du pare-brise (18), et/ou en que la première zone de connexion (16) a une section de connexion supérieure qui interagit avec un côté extérieur (44) de la zone de bord (42) du pare-brise (18), et **en ce que** la au moins une section de surface libre (58) est agencée sur la section de connexion latérale (52) et/ou la partie de connexion supérieure.

5. Agencement de baguette profilée (10) selon l'une des revendications précédentes, **caractérisé en ce que** la section de surface libre (58) fait face à la zone de bord (42) du pare-brise (18).

6. Agencement de baguette profilée (10) selon l'une des revendications précédentes, **caractérisé en ce que** l'élément supplémentaire (62) s'étend exclusivement dans la section de surface libre (58).

7. Agencement de baguette profilée (10) selon l'une des revendications 1 à 5, **caractérisé en ce que** dans la zone d'une section partielle de l'élément supplémentaire, celui-ci est recouvert à la fois sur son côté inférieur et sur son côté supérieur par un matériau de profilé (14) .

8. Agencement de baguette profilée (10) selon la revendication 7, **caractérisé en ce que** la section partielle est formée par une extrémité libre (68) de l'élément supplémentaire et/ou par une section (70) de l'élément supplémentaire faisant face à la seconde zone de connexion (20).

9. Agencement de baguette profilée (10) selon l'une des revendications précédentes, **caractérisé en ce que** la baguette profilée (12) présente une section centrale (24) qui connecte la première zone de connexion (16) et la seconde zone de connexion (20) l'une à l'autre, et **en ce que** l'élément supplémentaire présente des ouvertures dans la zone de la section centrale (24) présente des ouvertures, notamment sous la forme d'une perforation (72) .

10. Méthode de fabrication d'un agencement de baguette profilée (10) selon l'une des revendications précédentes, **caractérisée en ce que** la baguette profilée (12) et l'élément supplémentaire (62) sont réalisés indépendamment l'un de l'autre puis connectés l'un à l'autre.

11. Méthode de fabrication d'un agencement de baguette profilée (10) selon l'une des revendications 1 à 9, **caractérisée en ce que** le matériau de profilé (14) de la baguette profilée (12) est extrudé, **en ce que** l'élément supplémentaire (62) ou un matériau pour produire l'élément supplémentaire (62) est fourni pendant l'extrusion du matériau de profilé (14) et **en ce que** le matériau de profilé (14) se solidifie dans un état connecté à l'élément supplémentaire (62) au moins par endroits.
